# FASCICULE DE BREVET EUROPEEN

(11) **EP 4 124 943 B1**
(45) Date de publication et mention de la délivrance du brevet: **22.01.2025**
(21) Numéro de dépôt: 22186688.2
(22) Date de dépôt: 25.07.2022
(51) Int. Cl.: G06F 8/654, G06F 9/54

(54) **SYSTEME SUR PUCE COMPRENANT UN LOGICIEL D'INSTALLATION DE PROGRAMMES**
CHIP-SYSTEM MIT EINER PROGRAMM-INSTALLATIONS-SOFTWARE
CHIP SYSTEM INCLUDING A PROGRAM INSTALLATION SOFTWARE

(30) Priorité: 26.07.2021 FR 2108107
(43) Date de publication de la demande: 01.02.2023
(73) Titulaire: STMicroelectronics (Grand Ouest) SAS, 72100 Le Mans (FR)
(72) Inventeur: GREGOIRE, Fabien, 35235 THORIGNE-FOUILLARD (FR)
(74) Mandataire: Casalonga

(56) Documents cités:
- CN-A- 107 402 776
- QINGQING XU: "A design and implement of IAP based on HTTP", COMPUTER SCIENCE AND SERVICE SYSTEM (CSSS), 2011 INTERNATIONAL CONFERENCE ON, IEEE, 27 June 2011 (2011-06-27), pages 1918 - 1922, XP032005078, ISBN: 978-1-4244-9762-1, DOI: 10.1109/CSSS.2011.5974104
- HUA J ET AL: "Bluetooth wireless monitoring, diagnosis and calibration interface for control system of fuel cell bus in Olympic demonstration", JOURNAL OF POWER SOURCES, ELSEVIER, AMSTERDAM, NL, vol. 186, no. 2, 15 January 2009 (2009-01-15), pages 478 - 484, XP025839954, ISSN: 0378-7753, [retrieved on 20081017], DOI: 10.1016/J.JPOWSOUR.2008.10.013

## Description

Des modes de réalisation et de mise en œuvre concernent les systèmes sur puce, et plus particulièrement la mise à jour de programmes installés sur un système sur puce.

Un système sur puce intègre généralement un logiciel d'installation de programmes. Ce logiciel d'installation est enregistré dans une mémoire non volatile du système sur puce pendant sa fabrication. Par exemple, le logiciel d'installation peut être compris dans un « firmware » installé sur le système sur puce. Ce logiciel d'installation est utilisé pour installer les programmes d'un utilisateur. Une fois les programmes de l'utilisateur installés, le logiciel d'installation peut également être utilisé pour mettre à jour les programmes installés. Par exemple, le logiciel d'installation peut être configuré pour enregistrer différentes versions d'un programme dans une mémoire non volatile. Un protocole de communication entre le logiciel d'installation et la mémoire non volatile est défini par le fabricant du système sur puce.

Un utilisateur du système sur puce peut quant à lui configurer le système sur puce selon des protocoles de communication qui peuvent être différents de celui prévu pour le logiciel d'installation.

Une fois les programmes de l'utilisateur installés sur le système sur puce, le logiciel d'installation prévu lors de la fabrication peut ne pas être utilisable car :
- le logiciel d'installation fonctionne en utilisant le(s) protocole(s) de communication défini(s) par le fabricant,
- le logiciel d'installation utilise une interface matérielle appropriée à son environnement de production qui n'est pas forcément celle choisie par l'utilisateur.

De plus, il est nécessaire de modifier la configuration du système sur puce (c'est-à-dire quitter la configuration de l'utilisateur) pour pouvoir utiliser le logiciel d'installation du fabricant. Or, la modification de la configuration a pour inconvénient de bloquer l'exécution des programmes de l'utilisateur et de nécessiter un redémarrage du système sur puce.

L'utilisateur prévoit donc généralement son propre logiciel d'installation pour mettre à jour ses programmes. Le logiciel d'installation de l'utilisateur est alors configuré pour fonctionner avec les protocoles de communication définis par l'utilisateur, pour mettre à jour ses programmes. De la sorte l'utilisateur n'a pas à modifier la configuration du système sur puce pour mettre à jour ses programmes.

Néanmoins, une telle solution présente l'inconvénient de nécessiter un espace mémoire supplémentaire pour enregistrer le logiciel d'installation développé par l'utilisateur, en plus de l'espace mémoire occupé par le logiciel d'installation initialement intégré dans le système sur puce. Une telle solution est donc coûteuse.

Le document "A design and implement of IAP based on HTTP" par QINGQING XU, publié le 27 juin 2011 lors de la conférence internationale COMPUTER SCIENCE AND SERVICE SYSTEM (CSSS), 2011, IEEE, pages 1918-1922, DOI: 10.1109/CSSS.2011.5974104 ISBN: 978-1-4244-9762-1, décrit une technique de mise à jour du firmware au sein de composants embarqués. En particulier, les données du programme sont reçues à l'aide du protocole HTTP par un serveur Web HTTPimplémenté au sein d'un processeur MCU STM32F107. Ces données sont ensuite transmises au micrologiciel "IAP" qui effectue la mise à jour en enregistrant les données en mémoire flash.

Le document " Bluetooth wireless monitoring, diagnosis and calibration interface for control system of fuel cell bus in Olympic demonstration" par HUA J ET AL, publié le 15 janvier 2009, dans le JOURNAL OF POWER SOURCES, ELSEVIER, AMSTERDAM, NL, vol. 186, no. 2, pages 478-484, ISSN: 0378-7753, DOI: 10.1016/ J.JPOWSOUR.2008.10.013 concerne une technique de programmation intégrée permettant la mise à jour en ligne d'une unité ECU via Bluetooth. En particulier, la technique divulguée par ce document utilise une section dédiée de la RAM comme tampon de données pour recevoir l'intégralité du fichier binaire de mise à jour avant que ce dernier ne soit gravé en mémoire flash.

Il convient donc de proposer une solution permettant de simplifier la mise à jour des programmes installés sur un système sur puce.

L'invention est exposée dans le jeu de revendications joint.

Selon un aspect, il est proposé un système sur puce comprenant :
- une mémoire non volatile,
- un processeur configuré pour exécuter :
   o un système d'exploitation configuré pour recevoir des données selon un premier protocole de communication,
   o un logiciel d'installation de programmes configuré pour communiquer avec la mémoire non volatile selon un deuxième protocole de communication afin de pouvoir enregistrer des données d'un programme dans cette mémoire non volatile,

   dans lequel le système d'exploitation est également configuré pour :
      - déterminer si des données reçus selon ledit premier protocole de communication sont des données de programme destinées au logiciel d'installation,
      - mettre à disposition du logiciel d'installation les données de programme reçues et destinées à ce dernier,
      - informer le logiciel d'installation que des données de programme qui lui sont destinées ont été reçues,
   et dans lequel le logiciel d'installation est configuré pour enregistrer les données de programme mises à sa disposition dans ladite mémoire non volatile selon le deuxième protocole de communication.

Ainsi, les données du programme sont reçues par le système d'exploitation selon le premier protocole de communication, puis mises à disposition du logiciel d'installation pour qu'il les enregistre dans la mémoire non volatile selon son propre protocole de communication. Le système sur puce permet donc d'utiliser le logiciel d'installation sans avoir à modifier la configuration du système sur puce.

De la sorte, le logiciel d'installation installé sur le système sur puce par le fabricant peut être utilisé simplement pour effectuer des mises à jour des programmes installés. Il n'est donc plus nécessaire pour l'utilisateur de développer son propre logiciel d'installation. Un seul logiciel d'installation est ainsi installé dans la mémoire non volatile du système sur puce.

En outre, le système d'exploitation peut continuer d'exécuter un programme pendant que le logiciel d'installation effectue sa mise à jour.

Les données sont encapsulées dans une trame présentant un format défini selon le premier protocole de communication.

La trame comprend un en-tête suivi desdites données encapsulées et se termine par un postambule, l'en-tête étant configuré pour indiquer si les données sont destinées au logiciel d'installation.

Avantageusement, le logiciel d'installation est configuré pour vérifier une authenticité des données mises à disposition par le système d'exploitation.

Dans un mode de réalisation avantageux, les données de programme reçus par le système d'exploitation sont chiffrées. Le logiciel d'installation est alors configuré pour déchiffrer les données avant de les enregistrer dans la mémoire non volatile.

De préférence, le système sur puce comprend une mémoire volatile. Le système d'exploitation est alors configuré pour mettre les données de programme à disposition du logiciel d'installation dans la mémoire volatile.

Selon un autre aspect, il est proposé un procédé d'installation d'un programme comprenant :
- une transmission des données du programme à un système sur puce tel que décrit précédemment, selon le premier protocole de communication,
- une réception par le système d'exploitation du système sur puce des données du programme,
- une vérification par le système d'exploitation que les données reçus sont bien des données du programme destinées au logiciel d'installation,
- une mise à disposition par le système d'exploitation des données du programme pour le logiciel d'installation,
- une indication par le système d'exploitation au logiciel d'installation que des données du programme ont été reçues,
- un enregistrement des données du programme par le logiciel d'installation dans la mémoire non volatile selon le deuxième protocole de communication.

Les données reçues par le système d'exploitation sont encapsulées dans une trame présentant un format défini selon le premier protocole de communication. La trame comprend un en-tête suivi desdites données encapsulées et se termine par un postambule, l'en-tête étant configuré pour indiquer si les données sont destinées au logiciel d'installation.

Avantageusement, le procédé comprend en outre une vérification par le logiciel d'installation d'une authenticité des données mises à disposition par le système d'exploitation.

Dans un mode de mise en œuvre avantageux, les données de programme reçus par le système d'exploitation sont chiffrées, le procédé comprenant en outre un déchiffrement par le logiciel d'installation des données mises à disposition par le système d'exploitation avant de les enregistrer dans la mémoire non volatile.

Dans un mode de mise en œuvre avantageux, les données de programme sont mises à disposition du logiciel d'installation par le système d'exploitation dans une mémoire volatile

D'autres avantages et caractéristiques de l'invention apparaîtront à l'examen de la description détaillée de modes de mise en œuvre et de réalisation, nullement limitatifs, et des dessins annexés sur lesquels :
[Fig 1]
[Fig 2]

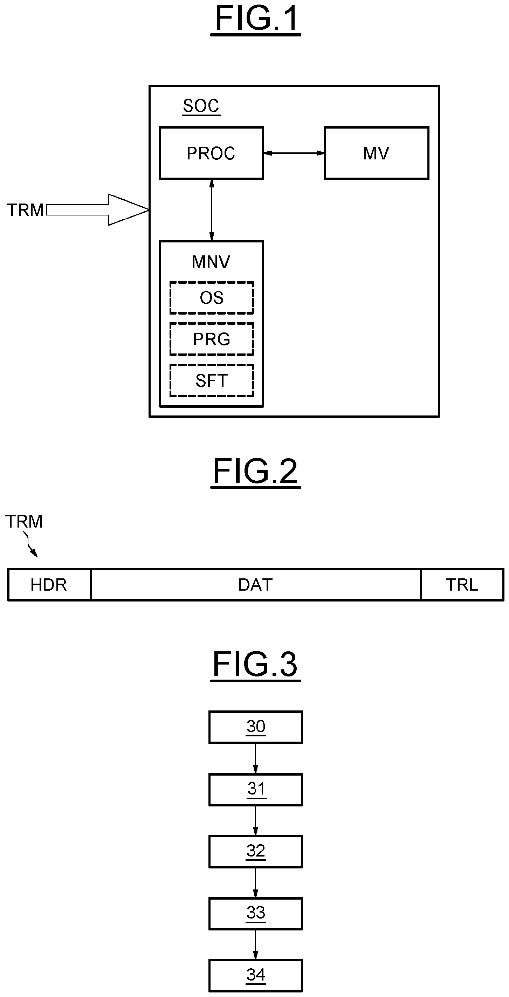

[Fig 3] illustrent schématiquement des modes de réalisation et de mise en œuvre de l'invention.

La figure 1 illustre un système sur puce SOC selon un mode de réalisation. Le système sur puce SOC comprend un processeur PROC, une mémoire non volatile MNV et une mémoire volatile MV.

Un système d'exploitation OS et un logiciel d'installation SFT sont enregistrés dans la mémoire non volatile MNV. Le logiciel d'installation SFT est défini par un fabricant du système sur puce SOC et le système d'exploitation OS est défini par un utilisateur du système sur puce SOC.

Une partie de la mémoire non volatile MNV peut être réservée au fabricant du système sur puce. Cette partie de la mémoire non volatile permet alors de stocker le logiciel d'installation SFT. Une autre partie de la mémoire non volatile MNV peut être réservée à l'utilisateur du système sur puce. Cette partie peut alors servir pour stocker le système d'exploitation de l'utilisateur. Cette même partie de la mémoire non volatile MNV peut également être utilisée pour enregistrer des programmes PRG de l'utilisateur.

Le système d'exploitation OS est configuré pour recevoir des données selon un premier protocole de communication défini par l'utilisateur.

En particulier, les données sont transmises au système d'exploitation OS par trames. Ces trames présentent un format défini par l'utilisateur. Un exemple de trame TRM est illustré à la figure 2. Chaque trame TRM commence par un en-tête HDR (en anglais « header ») suivi de données DAT et se termine par un postambule TRL (en anglais « trailer »). Les données DAT peuvent être de différents types. Le système d'exploitation est configuré pour traiter certains types de données. Ainsi, l'en-tête HDR comprend des informations relatives aux données DAT de la trame TRM, notamment le type des données de la trame. Le postambule TRL permet de signaler la fin d'une trame TRM. Les données DAT de la trame peuvent être chiffrées.

En outre, certains types de données DAT peuvent être destinées au logiciel d'installation SFT. Les données DAT destinées au logiciel d'installation peuvent être des données d'un programme. Ces données de programme peuvent être destinées au logiciel d'installation SFT pour une mise à jour d'un programme installé sur le système sur puce. Les données de programme correspondent alors à une nouvelle version d'un programme enregistré dans la mémoire non volatile du système sur puce.

Les données DAT destinées au logiciel d'installation SFT sont transmises au système d'exploitation OS selon le même format que les données pouvant être traitées par le système d'exploitation OS. Les données destinées au logiciel d'installation SFT sont donc encapsulées dans un format lisible par le système d'exploitation OS. L'en-tête HDR d'une trame TRM peut alors permettre d'indiquer au système d'exploitation OS que cette trame TRM est destinée au logiciel d'installation SFT.

En particulier, le système d'exploitation OS est configuré pour lire l'en-tête HDR de chaque trame TRM reçue afin de déterminer si la trame TRM reçue est destinée au logiciel d'installation SFT à partir de son en-tête HDR.

Lorsque le système d'exploitation OS identifie qu'une trame est destinée au logiciel d'installation SFT, le système d'exploitation OS est configuré pour extraire les données DAT de la trame TRM puis les enregistrer dans la mémoire volatile MV.

Une fois les données enregistrées dans la mémoire volatile MV, le système d'exploitation OS est configuré pour appeler le logiciel d'installation SFT pour que ce dernier traite lesdites données DAT qui lui sont destinées.

En particulier, le logiciel d'installation SFT est configuré pour vérifier tout d'abord une authenticité des données. Cette authentification est rendue possible par la présence d'une donnée secrète stockée dans la mémoire non volatile MNV et connue de l'utilisateur.

Une fois l'authenticité des données vérifiée, le logiciel d'installation SFT est configuré pour déchiffrer les données DAT. Puis, après avoir déchiffré les données DAT, le logiciel d'installation est configuré pour enregistrer les données dans la mémoire non volatile MNV selon son propre protocole de communication afin d'effectuer la mise à jour du programme.

La figure 3 illustre un mode de mise en œuvre d'un procédé de mise à jour d'un programme PRG installé sur un système sur puce, tel que celui décrit précédemment.

Le procédé comprend une étape 30 dans laquelle le système sur puce SOC reçoit des données du programme par trames. Ces données peuvent être chiffrées. Ces données correspondent à une nouvelle version du programme installé sur le système sur puce.

Ces trames sont alors lues successivement par le système d'exploitation OS installé sur le système sur puce.

En particulier, pour chaque trame reçue, le procédé comprend une étape 31 dans laquelle le système d'exploitation OS analyse l'en-tête HDR de la trame TRM. L'analyse de l'en-tête HDR de la trame TRM permet au système d'exploitation OS de déterminer si les données DAT de la trame TRM sont destinées au logiciel d'installation SFT.

Si le système d'exploitation OS détermine que les données DAT d'une trame TRM sont destinées au logiciel d'installation SFT, le procédé comprend une étape 32 dans laquelle le système d'exploitation extrait les données DAT de la trame TRM et les enregistre dans la mémoire volatile MV.

Dans ce dernier cas, le procédé comprend également une étape 33 dans laquelle le système d'exploitation OS appelle le logiciel d'installation SFT afin de lui indiquer que des données DAT qui lui sont destinées sont disponibles dans la mémoire volatile MV.

Puis, le procédé comprend une étape 34 dans laquelle le logiciel d'installation SFT traite les données qui lui sont destinées dans la mémoire volatile MV. En particulier, le logiciel d'installation SFT vérifie l'authenticité des données présentes dans la mémoire volatile MV. Si le logiciel d'installation SFT considère que les données sont authentiques, le logiciel déchiffre alors les données avant de les enregistrer dans la mémoire non volatile MNV selon son propre protocole de communication. Le logiciel d'installation SFT vérifiera enfin l'intégrité de la mise à jour (grâce à la vérification d'une signature fournit par l'utilisateur via les données DAT également). L'enregistrement des données DAT de la nouvelle version du programme dans la mémoire non volatile MNV permet de mettre à jour le programme installé sur le système sur puce SOC.

Le système sur puce SOC permet d'utiliser le logiciel d'installation sans avoir à modifier la configuration du système sur puce pour installer ou mettre à jour un programme. En effet, les données du programme sont encapsulées selon le premier protocole de communication défini pour le système d'exploitation, puis mises à disposition du logiciel d'installation pour qu'il les enregistre dans la mémoire non volatile selon son propre protocole de communication.

De la sorte, le logiciel d'installation installé sur le système sur puce par le fabricant peut être utilisé simplement pour effectuer des mises à jour des programmes installés. Il n'est donc plus nécessaire pour l'utilisateur de développer son propre logiciel d'installation. Un seul logiciel d'installation est ainsi installé dans la mémoire non volatile du système sur puce. En outre, le système d'exploitation gardant le contrôle sur la gestion de la réception des trames à destination du logiciel d'installation, cela lui permet d'établir un ordre de priorité pour ses tâches de façon à pouvoir exécuter un programme durant la mise à jour si nécessaire.

## Revendications

1. **Système** sur puce comprenant :
- une mémoire non volatile (MNV),
- un processeur (PROC) configuré pour exécuter :
o un système d'exploitation (OS) configuré pour recevoir des données selon un premier protocole de communication,
o un logiciel d'installation de programmes (SFT) configuré pour communiquer avec la mémoire non volatile (MNV) selon un deuxième protocole de communication afin de pouvoir enregistrer des données d'un programme (PRG) dans cette mémoire non volatile,
dans lequel le système d'exploitation est également configuré pour :
- déterminer si des données reçus selon ledit premier protocole de communication sont des données de programme destinées au logiciel d'installation,
- mettre à disposition du logiciel d'installation (SFT) les données de programme reçues et destinées à ce dernier,
- informer le logiciel d'installation que des données de programme qui lui sont destinées ont été reçues,
dans lequel le logiciel d'installation (SFT) est configuré pour enregistrer les données de programme mises à sa disposition dans ladite mémoire non volatile (MNV) selon le deuxième protocole de communication,
et dans lequel les données sont encapsulées dans une trame (TRM) présentant un format défini selon le premier protocole de communication, la trame (TRM) comprenant un en-tête (HDR) suivi desdites données (DAT) encapsulées et se termine par un postambule (TRL), l'en-tête (HDR) étant configuré pour indiquer si les données (DAT) sont destinées au logiciel d'installation (SFT).

2. Système selon la revendication 1, dans lequel le logiciel d'installation (SFT) est configuré pour vérifier une authenticité des données (DAT) mises à disposition par le système d'exploitation (OS).

3. Système selon l'une quelconque des revendications 1 ou 2, dans lequel les données (DAT) de programme reçus par le système d'exploitation (OS) sont chiffrées et dans lequel le logiciel d'installation (SFT) est configuré pour déchiffrer les données (DAT) avant de les enregistrer dans la mémoire non volatile (MNV).

4. Système selon l'une des revendications 1 à 3, comprenant en outre une mémoire volatile, et dans lequel le système d'exploitation (OS) est configuré pour mettre les données (DAT) de programme à disposition du logiciel d'installation (SFT) dans la mémoire volatile (MV).

5. Procédé d'installation d'un programme (PRG) sur un système sur puce selon l'une des revendications 1 à 4 comprenant :
- une transmission des données (DAT) du programme au système sur puce selon le premier protocole de communication,
- une réception par le système d'exploitation du système sur puce des données (DAT) du programme,
- une vérification par le système d'exploitation (OS) que les données reçues sont bien des données du programme (PRG) destinées au logiciel d'installation de programmes (SFT),
- une mise à disposition par le système d'exploitation (OS) des données de programme reçues pour le logiciel d'installation (SFT),
- une indication par le système d'exploitation (OS) au logiciel d'installation (SFT) que des données du programme ont été reçues,
- un enregistrement des données (DAT) du programme par le logiciel d'installation (SFT) dans la mémoire non volatile selon le deuxième protocole de communication,
et dans lequel les données reçues par le système d'exploitation sont encapsulées dans une trame (TRM) présentant un format défini selon le premier protocole de communication, la trame (TRM) comprenant un en-tête (HDR) suivi desdites données (DAT) encapsulées et se termine par un postambule (TRL), l'en-tête (HDR) étant configuré pour indiquer si les données (DAT) sont destinées au logiciel d'installation (SFT).

6. Procédé selon la revendication 5, comprenant en outre une vérification par le logiciel d'installation d'une authenticité des données (DAT) mises à disposition par le système d'exploitation (OS).

7. Procédé selon l'une quelconque des revendications 5 ou 6, dans lequel les données (DAT) de programme reçus par le système d'exploitation (OS) sont chiffrées, le procédé comprenant en outre un déchiffrement par le logiciel d'installation (SFT) des données mises à disposition par le système d'exploitation avant de les enregistrer dans la mémoire non volatile (MNV).

8. Procédé selon l'une des revendications 5 à 7, les données (DAT) de programme sont mises à disposition du logiciel d'installation (SFT) par le système d'exploitation (OS) dans une mémoire volatile (MV).

## Patentansprüche

1. Ein-Chip-System, umfassend:
- einen nichtflüchtigen Speicher (MNV),
- einen Prozessor (PROC), der konfiguriert ist, zum Ausführen von:
∘ einem Betriebssystem (OS), das konfiguriert ist, um Daten gemäß einem ersten Kommunikationsprotokoll zu empfangen,
oeiner Programminstallationssoftware (SFT), die konfiguriert ist, um mit dem nichtflüchtigen Speicher (MNV) gemäß einem zweiten Kommunikationsprotokoll zu kommunizieren, um Daten eines Programms (PRG) in diesem nichtflüchtigen Speicher speichern zu können,
wobei das Betriebssystem auch konfiguriert zum:
- Bestimmen, ob die Daten, die gemäß dem ersten Kommunikationsprotokoll empfangen wurden, Programmdaten sind, die für die Installationssoftware vorgesehen sind,
- Bereitstellen, an die Installationssoftware (SFT), der Programmdaten, die empfangen wurden und für die Letztere vorgesehen sind,
- Informieren der Installationssoftware, dass Programmdaten, die für sie vorgesehen sind, empfangen wurden,
wobei die Installationssoftware (SFT) konfiguriert ist, um die Programmdaten, die für sie im nichtflüchtigen Speicher (MNV) gemäß dem zweiten Kommunikationsprotokoll bereitgestellt wurden, zu speichern, und wobei die Daten in einem Frame (TRM) eingekapselt sind, der ein Format aufweist, das gemäß dem ersten Kommunikationsprotokoll definiert ist, wobei der Frame (TRM) einen Header (HDR) umfasst, der von den eingekapselten Daten (DAT) gefolgt ist, und mit einer Postambel (TRL) endet, wobei der Header (HDR) konfiguriert ist, um anzugeben, ob die Daten (DAT) für die Installationssoftware (SFT) vorgesehen sind.

2. System nach Anspruch 1, wobei die Installationssoftware (SFT) konfiguriert ist, um eine Authentizität der Daten (DAT), die vom Betriebssystem (OS) bereitgestellt wurden, zu verifizieren.

3. System nach einem der Ansprüche 1 oder 2, wobei die Programmdaten (DAT), die vom Betriebssystem (OS) empfangen wurden, verschlüsselt sind, und wobei die Installationssoftware (SFT) konfiguriert ist, um die Daten (DAT) zu entschlüsseln, bevor sie sie im nichtflüchtigen Speicher (MNV) speichert.

4. System nach einem der Ansprüche 1 bis 3, ferner einen flüchtigen Speicher umfassend, und wobei das Betriebssystem (OS) konfiguriert ist, um die Programmdaten (DAT) der Installationssoftware (SFT) im flüchtigen Speicher (MV) bereitzustellen.

5. Verfahren zum Installieren eines Programms (PRG) auf einem Ein-Chip-System nach einem der Ansprüche 1 bis 4, umfassend:
- eine Übertragung von Daten (DAT) des Programms zum Ein-Chip-System gemäß dem ersten Kommunikationsprotokoll,
- einen Empfang, durch das Betriebssystem des Ein-Chip-Systems, der Daten (DAT) des Programms,
- eine Verifizierung durch das Betriebssystem (OS), dass die empfangenen Daten tatsächlich Daten des Programms (PRG) sind, die für die Programminstallationssoftware (SFT) vorgesehen sind,
- eine Bereitstellung, durch das Betriebssystem (OS), der empfangenen Programmdaten, an die Installationssoftware (SFT),
- eine Angabe, durch das Betriebssystem (OS), an die Installationssoftware (SFT), dass Daten des Programms empfangen wurden,
- eine Speicherung der Daten (DAT) des Programms durch die Installationssoftware (SFT) im nichtflüchtigen Speicher gemäß dem zweiten Kommunikationsprotokoll,
und wobei die Daten, die vom Betriebssystem empfangen wurden, in einem Frame (TRM) eingekapselt sind, der ein Format aufweist, das gemäß dem ersten Kommunikationsprotokoll definiert ist, wobei der Frame (TRM) einen Header (HDR) umfasst, der von den eingekapselten Daten (DAT) gefolgt ist, und mit einer Postambel (TRL) endet, wobei der Header (HDR) konfiguriert ist, um anzugeben, ob die Daten (DAT) für die Installationssoftware (SFT) vorgesehen sind.

6. Verfahren nach Anspruch 5, ferner eine Verifizierung, durch die Installationssoftware, einer Authentizität der Daten (DAT) umfassend, die vom Betriebssystem (OS) bereitgestellt wurden.

7. Verfahren nach einem der Ansprüche 5 oder 6, wobei die Programmdaten (DAT), die vom Betriebssystem (OS) empfangen wurden, verschlüsselt sind, wobei das Verfahren ferner eine Entschlüsselung der vom Betriebssystem bereitgestellten Daten durch die Installationssoftware (SFT) umfasst, bevor sie sie im nichtflüchtigen Speicher (MNV) speichert.

8. Verfahren nach einem der Ansprüche 5 bis 7, wobei die Programmdaten (DAT) durch das Betriebssystem (OS) der Installationssoftware (SFT) in einem flüchtigen Speicher (MV) bereitgestellt werden.

## Claims

1. A chip system comprising
- a non-volatile memory (MNV),
- a processor (PROC) configured to execute:
o an operating system (OS) configured to receive data according to a first communication protocol,
o a program installation software (SFT) configured to communicate with the non-volatile memory (MNV) according to a second communication protocol in order to be able to record data of a program (PRG) in this non-volatile memory, wherein the operating system is also configured to:
- determine whether data received according to said first communication protocol are program data intended for the installation software
- make available to the installation software (SFT) the program data which are received and intended for the latter,
- inform the installation software that program data which are intended therefor have been received,
wherein the installation software (SFT) is configured to record the program data made available thereto in said non-volatile memory (MNV) according to the second communication protocol and wherein the data are encapsulated in a frame (TRM) having a format defined according to the first communication protocol, the frame (TRM) comprising a header (HDR) followed by said encapsulated data (DAT) and ends with a postamble (TRL), the header (HDR) being configured to indicate whether the data (DAT) is intended for the installation software (SFT).

2. The system according to claim 1, wherein the installation software (SFT) is configured to check an authenticity of the data (DAT) made available by the operating system (OS).

3. The system according to any one of claims 1 or 2, wherein the program data (DAT) received by the operating system (OS) are encrypted and wherein the installation software (SFT) is configured to decrypt the data (DAT) before recording them in the non-volatile memory (MNV).

4. The system according to one of claims 1 to 3, further comprising a volatile memory, and wherein the operating system (OS) is configured to make the program data (DAT) available to the installation software (SFT) in the volatile memory (MV).

5. A method for installing a program (PRG) on a chip system according to one of claims 1 to 4, comprising:
- a transmission of data (DAT) from the program to the chip system, according to the first communication protocol,
- a reception by the operating system of the chip system of the program data (DAT),
- a check by the operating system (OS) that the received data is program data (PRG) intended for the program installation software (SFT),
- a provision, by the operating system (OS), of the received program data for the installation software (SFT),
- an indication by the operating system (OS) to the installation software (SFT) that program data has been received,
- a recording of the program data (DAT) by the installation software (SFT) in the non-volatile memory according to the second communication protocol,
and wherein the data received by the operating system are encapsulated in a frame (TRM) having a format defined according to the first communication protocol, the frame (TRM) comprising a header (HDR) followed by said encapsulated data (DAT) and ends with a postamble (TRL), the header (HDR) being configured to indicate whether the data (DAT) is intended for the installation software (SFT).

6. The method according to claim 5, further comprising a check by the installation software of an authenticity of the data (DAT) made available by the operating system (OS).

7. The method according to any one of claims 5 or 6, wherein the program data (DAT) received by the operating system (OS) are encrypted, the method further comprising a decryption by the installation software (SFT) of the data made available by the operating system before recording them in the non-volatile memory (MNV).

8. The method according to one of claims 5 to 7, the program data (DAT) is made available to the installation software (SFT) by the operating system (OS) in a volatile memory (MV).
